Europäisches Patentamt

European Patent Office

Office européen des brevets

(19)

(11) Publication number: **0 018 822**
**B1**

(12) **EUROPEAN PATENT SPECIFICATION**

(45) Date of publication of patent specification: **22.02.84**

(51) Int. Cl.³: **H 02 K 44/08**

(21) Application number: **80301412.5**

(22) Date of filing: **30.04.80**

(54) **A closed-circuit magnetohydrodynamic (MHD) system for producing electrical power and a method for producing electrical power by means of a magnetohydrodynamic (MHD) generator.**

(30) Priority: **04.05.79 IL 57208**

(43) Date of publication of application:
**12.11.80 Bulletin 80/23**

(45) Publication of the grant of the patent:
**22.02.84 Bulletin 84/8**

(84) Designated Contracting States:
**AT BE CH DE FR GB IT LI LU NL SE**

(56) References cited:
**CH - A - 436 449**
**FR - A - 1 604 828**
**FR - A - 2 126 611**
**US - A - 1 717 413**
**US - A - 3 133 212**
**US - A - 3 355 605**
**US - A - 3 377 490**
**US - A - 4 095 118**
**US - A - 4 191 901**

(73) Proprietor: **BEN-GURION UNIVERSITY OF THE NEGEV RESEARCH AND DEVELOPMENT AUTHORITY**
**P.O. Box 1025**
**Beer-Sheva (IL)**

(72) Inventor: **Branover, Herman**
**3 Hadar Str. Omer**
**Beer-Sheva (IL)**

(74) Representative: **Hind, Raymond Stenton et al, Mathisen, Macara & Co. Lyon House Lyon Road Harrow, Middlesex, HA1 2ET (GB)**

(56) References cited:
**Zeitschrift für Flugwissenschaften Verlag Vieweg, Braunschweig, vol. 19, Heft 8/9 August-September W. Jackson: "MHD Power Generation" pages 380-390**
**ELECTRONIC INDUSTRIES, Chilton CO. 19 (1960.09), September 1960 Radnar US "Electronic Industries Looks at Unconventional Power Converters" pages 104-107**

Courier Press, Leamington Spa, England.

A closed-circuit magnetohydrodynamic (MHD) system for producing
electrical power and a method for producing electrical power
by means of a magnetohydrodynamic (MHD) generator

The present invention relates to a system and a method for the production of electric power by means of a magnetohydrodynamic (MHD) generator.

Heretofore, there have been suggested various systems for utilizing MHD-generators, for the production of electricity in general and, for the production of electricity by means of thermal electric power conversion, in particular. In a number of previously proposed systems, fuel was used to drive liquid metal through the MHD-generator by means of plasma produced from fuel combustion, wherein the operating temperatures were relatively high, e.g., above 800°C.

In US—A—3 453 462 there is proposed an MHD-generator in which a nonconductive gas is heated, for example, by means of a nuclear reactor, to produce gas of high kinetic energy to drive liquid metal mist from a mixing chamber to a MHD-generator in such proportions that the liquid metal coalesces into slugs of metal. The slugs of metal are separated by pockets of the nonconductive gas whose kinetic energy aids in the movement of the slugs through the MHD-generator to generate electric current. After leaving the generator, the slugs are separated from the nonconductive gas. The liquid metal and the gas are recirculated by means of pumps through heat exchangers, to increase their respective kinetic energies.

In addition to the fact that such slugs disintegrate and the metal adheres to the walls of the carrying duct, this system also suffers from the drawback that in order to circulate the separated gas, it is necessary to provide the circulating pump with a substantial amount of energy which, of course, greatly detracts from the efficiency of this system to the point of rendering the same uneconomical.

It should also be mentioned that due to the fact that through the MHD-generator there are passed slugs separated by pockets of gas, the generated electricity is in the form of a pulsating or intermittent D.C. and moreover, the electrical current which is produced is discontinuous, irregular and non-predictable.

In US—A—3 443 129 there is proposed a vapour-liquid cycle MHD power conversion system which operates by the use of fluids at low fluid velocities. It is proposed to drive, in a single loop system, a single substance, namely, an electrically conductive liquid by heating the same at one point along the loop, to form bubbles of the same substance, which bubbles will drive the liquid to a condenser. When condensed, the driven liquid continues to flow through an MHD-generator either by a gravity force or by means of a pump. The liquid is then further directed to the heater to be reheated.

As can be appreciated, this system must utilize a source of high temperature in order to heat up the liquid to its boiling point to form the driving bubbles and, also, through the MHD-generator there is passed, at low velocity, only a single-phase medium.

There is proposed in FR—A—1 604 828 an MHD-system in which the working fluid of the system consists of a chemical compound which when heated decomposes into a propelling gas and a liquid metal. The mixture is condensed after passing through the MHD-generator, to reform the chemical compound. An alternative working fluid consists of a metal soluble with the propelling fluid which may consist of the vapour phase of a different liquid metal. This system requires a relatively high temperature differential between the hot and cold parts of the system to decompose the chemical compound or to dissolve the propelling phase out of the liquid metal solution. The liquid metal itself is subject to the full temperature differential and due to the high thermal capacity of liquid metals, this means that a high heat input is required.

While previously proposed systems are capable of producing electric currents by the conversion of thermal energy into electricity utilizing an MHD-generator, they are able to operate only at high temperatures which is very costly to produce.

According to the present invention, there is provided a closed-circuit magnetohydrodynamic (MHD) system for producing electrical power, comprising heating means for heating an MHD-liquid to produce a flow of vapour propelling a liquid metal, an MHD-generator for receiving the flow to thereby generate electricity, condensing means for condensing the vapour phase of the flow, and means for returning the liquid to the heating means to be reheated, characterised in that the MHD-liquid consists of a mixture of a liquid metal with a propelling liquid which is either water or an organic liquid with a boiling point below 400°C and lower than that of the liquid metal, the liquid metal and propelling liquid being nonsoluble each with respect to the other, the mixture is heated in the heating means to produce a liquid metal-vapour flow, and the mixture is condensed in the condensing means to form liquid metal carrying droplets of the propelling liquid.

The present invention further provides a method for producing electrical power by means of a magnetohydrodynamic (MHD) generator, comprising the steps of heating an MHD-liquid to produce a flow of vapour propelling a liquid metal, generating electricity from said flowing metal, condensing the vapour and returning the MHD-liquid to be heated again, characterised in that the MHD-liquid is a mixture of a liquid metal and a propelling liquid which is either water or an organic liquid with a boiling point below 400°C and lower than that of the liquid metal, the propelling liquid and liquid metal being mutually non-soluble, in that the heating means is operative to vapourise the propelling liquid, and in that the condensing step produces a liquid metal carrying droplets of the propelling liquid.

Embodiments of the invention will now be described, by way of example only, with reference to the accompanying diagrammatic drawings, in which:

Figure 1 is a schematic illustration of an MHD system embodying the present invention;

Figure 2 is a schematic illustration of a modification of the system of Figure 1; and

Figure 3 is a schematic illustration of a further embodiment of an MHD system according to the present invention.

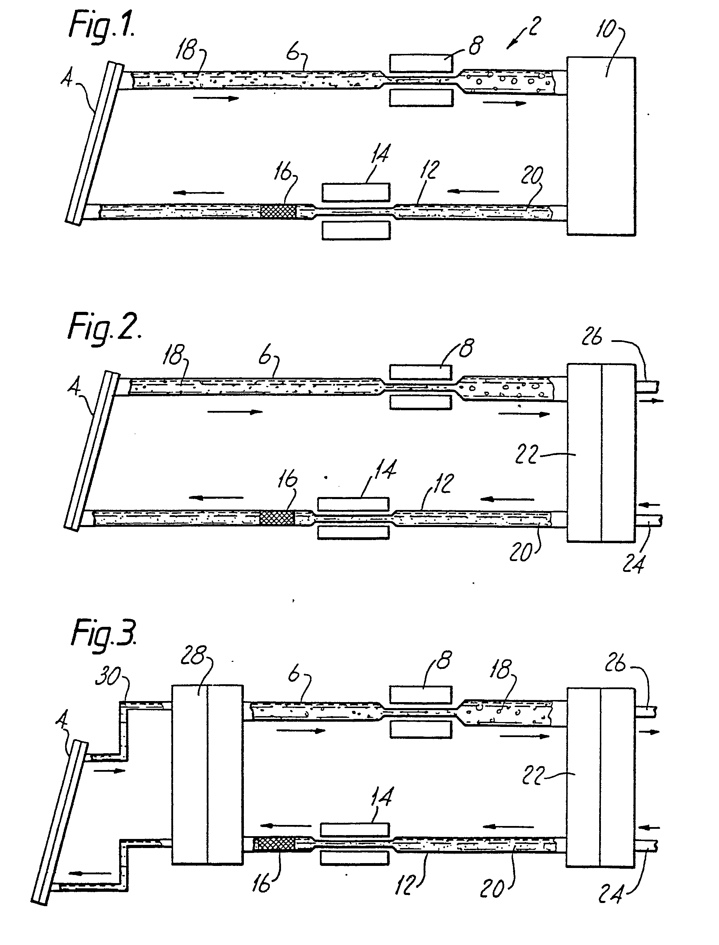

In the system of Figure 1, there is provided a closed loop or duct system 2 for converting heat from a relatively low-temperature heat source or low-grade heating source, e.g. solar energy, into electrical current. The system further comprises a heating device in the form of a solar absorber 4, which may be of any known type as, for example, of the flat collector type or of the more elaborate solar energy concentrator type. The interior of the solar absorber 4 is in fluid communication with a conduit 6 leading via an MHD-generator 8 to a condenser 10. The interior of the condenser 10 is in fluid communication with a conduit 12 leading to the absorber 4 via a pump 14, e.g. an MHD-pump. Optionally, between the pump 14 and the absorber 4, there is installed a fluid mixer or dispersing means 16, which may be constituted by a set of screens or by a plurality of vanes inside the conduit 12.

The operation of the system is as follows:

an electrically conductive liquid metal, e.g. NaK alloy eutectic, mercury, gallium or tin and a propelling liquid which is either water or a low boiling point organic liquid, e.g. neohexane (for NaK) or freon or water (for mercury, gallium or tin) are introduced in the system forming a mixture of liquid metal and propelling liquid, as will be apparent, neither liquid can dissolve within the other liquid. For avoiding phase separation and for the promoting of foaming, surfactant additives, e.g. carbon black, sulfur, selenium for NaK or magnesia for mercury, could optionally also be used.

As the mixture of liquid metal and propelling liquid is heated up by means of, for example, a solar energy absorber, when a plane collector or collectors are used, where it is expected that the mixture of liquid metal and propelling liquid will heat up to about 110—120°C; alternatively a solar concentrating collector, like concentrating mirrors or a parabolic collector, can be used, where is is expected that the mixture will heat up to about 300—400°C, the propelling liquid is brought to its boiling temperature and a two-phase liquid metal-vapour 18, is produced. The vapour bubbles thus formed expand and accelerate the two-phase flow in the conduit 6 through the MHD-generator thereby producing electricity. The expansion of the vapour bubbles in the conduit is almost isothermal since the heat capacity of the liquid metal is manyfold higher than that of the vapour. The direct contact heat exchanger and the two-phase flow acceleration at constant temperature provides an efficient Rankine-type thermodynamic cycle.

After leaving the MHD-generator, the void fraction is not separated, as it is usually done in other MHD systems, but rather, it is condensed in condenser 10, into droplets forming a mixture 20 of liquid metal and droplets of propelling liquid and thus the desired features of retaining throughout the cycle a homogeneous mixture and the recirculation of liquid rather than a gas, is kept.

The liquid metal carrying the droplets of the propelling liquid and being in direct-contact heat-exchange therewith is then recycled back to the solar heater to be reheated. This can be achieved by means of the shown MHD pump 14, which pump may use a small part of the electric current produced in the MHD-generator. Before entering the heat absorber 4, the mixture 20 is advantageously passed through the mixer or disperser 16 where the droplets of the propelling liquid are atomized and dispersed more homogeneously in the liquid metal.

A modification of the system of Figure 1 is illustrated in Figure 2 wherein the same reference numbers are used to identify components having the same function and operation. As can be seen, the system is substantially identical to the previously described one, except for the condenser which, in the present embodiment, is a heat exchange-condenser 22 having an inlet pipe 24 and an outlet pipe 26, respectively supplying to the heat exchanger cold fluid, e.g., water, and extracting therefrom fluid heated by means of the heat energy which is given off by the condensation of the vapour bubbles into liquid droplets. The heated fluid can be used for any suitable purpose.

The total efficiency of this system, simultaneously producing electricity and heat, is about 50% even when plane or flat collectors are used.

Turning now to Figure 3, there is illustrated still a further embodiment of the present invention. Here again identical reference numbers are used to identify similar components. According to this embodiment, there is interposed, between the absorber 4 and the conduits 6 and 12, a heat exchanger 28 so that the mixture of liquid metal and propelling liquid is heated by the solar energy via the heat exchanger 28 and the heat absorbed in the absorber 4 is transferred to the heat exchanger by means of a liquid 30 circulating between the absorber and the heat exchanger in a closed loop, whereby said recycled liquid metal and organic liquid droplets are indirectly reheated by the energy collected by said solar energy absorber rather than directly as in the previously illustrated embodiments.

Advantageously, the heat carrying liquid from the absorber to heat exchanger may be constituted by a liquid metal, thus forming a highly effective liquid metal-liquid metal heat exchanger. Due to the high thermal conductivity and low vapour pressure of liquid metals, it is possible to increase the temperatures commonly achieved in solar absorbers and, consequently, to obtain a more efficient electricity and hot liquid producing system.

Also, the optional use of permanent magnets in the MHD-generator and/or in the MHD-pump is of advantage since there is no need for energy for the excitation of the necessary magnetic fields.

The MHD thermal electric power systems particularly described operate with relatively low temperatures, in contrast to the previously proposed systems discussed earlier.

## Claims

1. A closed-circuit magnetohydrodynamic (MHD) system for producing electrical power, comprising heating means (4; 4, 28) for heating an MHD-liquid to produce a flow of vapour propelling a liquid metal, an MHD-generator (8) for receiving the flow to thereby generate electricity, condensing means (10; 22) for condensing the vapour phase of the flow, and means (14) for returning the liquid to the heating means (4; 4, 28) to be reheated, characterised in that the MHD-liquid consists of a mixture of a liquid metal with a propelling liquid which is either water or an organic liquid with a boiling point below 400°C and lower than that of the liquid metal, the liquid metal and propelling liquid being non-soluble each with respect to the other, the mixture is heated in the heating means (4; 4, 28) to produce a liquid metal-vapour flow, and the mixture is condensed in the condensing means (10; 22) to form liquid metal carrying droplets of the propelling liquid.

2. A system according to claim 1, wherein the heating means comprises a solar energy absorber (4).

3. A system according to claim 1, wherein the solar energy absorber (4) contains liquid metal which heats the mixture via a heat exchanger (28).

4. A system according to any of claims 1 to 3, further comprising a disperser (16) for dispersing the propelling liquid in the liquid metal prior to heating.

5. A method for producing electrical power by means of a magnetohydrodynamic (MHD) generator, comprising the steps of heating an MHD-liquid to produce a flow of vapour propelling a liquid metal, generating electricity from said flowing metal, condensing the vapour and returning the MHD-liquid to be heated again, cahracterised in that the MHD-liquid is a mixture of a liquid metal and a propelling liquid which is either water or an organic liquid with a boiling point below 400°C and lower than that of the liquid metal, the propelling liquid and liquid metal being mutually non-soluble, in that the heating means is operative to vapourise the propelling liquid, and in that the condensing step produces a liquid metal carrying droplets of the propelling liquid.

6. A method as claimed in claim 5, characterised in that it further comprises the step of dispersing the propelling liquid in the liquid metal prior to the heating step.

7. A method as claimed in claim 5 or 6, characterised in that the heating step comprises heating the MHD-liquid with a solar energy absorber (4).

## Revendications

1. Système magnétohydrodynamique (MHD) à circuit fermé destiné à la production d'énergie électrique, comprenant un dispositif de chauffage (4; 4, 28) destiné à chauffer un liquid MHD afin qu'un courant de vapeur propulsant un métal liquide soit formé, un générateur MHD (8) destiné à recevoir le courant et à créer de cette manière de l'électricité, un dispositif (10; 22) de condensation de la phase vapeur du courant, et un dispositif (14) destiné à renvoyer le liquide au dispositif de chauffage (4; 4, 28) afin qu'il soit réchauffé, caractérisé en ce que: le liquid MHD est formé d'un mélange d'un métal liquide avec un liquide propulseur qui est soit l'eau soit un liquide organique ayant une température d'ébullition inférieure à 400°C et inférieure à celle du métal liquide, le métal liquide et le liquide propulseur n'étant pas solubles mutuellement, le mélange est chauffé dans le dispositif de chauffage (4; 4, 28) afin qu'il forme un courant de vapeur et de métal liquide, et le mélange est condensé dans le dispositif de condensation (10; 22) afin qu'il forme du métal liquide transportant des gouttelettes du liquid propulseur.

2. Système selon la revendication 1, dans lequel le dispositif de chauffage comprend un absorbeur d'énergie solaire (4).

3. Système selon la revendication 1, dans lequel l'absorbeur d'énergie solaire (4) contient un métal liquide qui chauffe le mélange par l'intermédiaire d'un échangeur de chaleur (28).

4. Système selon l'une quelconque des revendications 1 à 3, comprenant en outre un dispositif (16) de dispersion du liquide propulseur dans le métal liquide avant le chauffage.

5. Procédé de production d'énergie électrique à l'aide d'un générateur magnétohydrodynamique (MHD) comprenant les étapes de chauffage d'un liquide MHD afin qu'un courant de vapeur propulsant un métal liquide soit formé, de création d'électricité à partir du courant de métal, de condensation de la vapeur et de renvoi du liquide MHD afin qu'il soit chauffé à nouveau, caractérisé en ce que: le liquide MHD est un mélange d'un métal liquide et d'un liquide propulseur qui est soit l'eau soit un liquide organique ayant une température d'ébullition inférieure à 400°C et inférieure à celle du métal liquide, le liquide propulseur et le métal liquide étant insolubles mutuellement, en ce que le dispositif de chauffage est destiné à vaporiser le liquide propulseur, et en ce que l'étape de condensation forme un métal liquide transportant des gouttelettes du liquide propulseur.

6. Procédé selon la revendication 5, caractérisé en ce qu'il comprend en outre l'étape de dispersion du liquide propulseur dans le métal liquide avant l'étape de chauffage.

7. Procédé selon l'une des revendications 5 et 6, caractérisé en ce que l'étape de chauffage comprend le chauffage du liquide MHD avec un absorbeur d'énergie solaire (4).

## Patentansprüche

1. Magnetohydrodynamische Anlage (MHD-Anlage) mit geschlossenem Umlauf zum Erzeugen von elektrischem Strom, mit einer Heizeinrichtung (4; 4, 28) zum Erwärmen einer MHD-Flüssigkeit, um eine Dampfströmung zu erzeugen, die ein flüssiges Metall vorantreibt, einem MHD-Generator (8) zur Aufnahme der Strömung, um hierbei Elektrizität zu erzeugen, einer Kondensierungseinrichtung (10; 22), zum Kondensieren der Dampfphase der Strömung, und einer Einrichtung (14) zum Rückführen der Flüssigkeit zur Heizeinrichtung (4; 4, 28), um erneut erwärmt zu werden, dadurch gekennzeichnet, daß die MHD-Flüssigkeit aus einem Gemisch aus einem flüssigen Metall mit einer Antriebsflüssigkeit ist, die entweder Wasser oder eine organische Flüssigkeit mit einem Siedepunkt unter 400°C und niedriger als jenem des flüssigen Metalls besteht, daß das flüssige Metall und die Antriebsflüssigkeit jeweils ineinander unlöslich sind, daß das Gemisch in der Heizeinrichtung (4; 4, 28) erwärmt wird, um eine Strömung aus flüssigem Metall und Dampf zu bilden, und daß das Gemisch in der Kondensierungseinrichtung (10; 22) kondensiert wird, um flüssiges Metall zu bilden, das Tröpfchen der Antriebsflüssigkeit trägt.

2. Anlage nach Anspruch 1, dadurch gekennzeichnet, daß die Heizeinrichtung einen Solarenergieabsorber (4) umfaßt.

3. Anlage nach Anspruch 1, dadurch gekennzeichnet, daß der Solarenergieabsorber (4) ein flüssiges Metall enthält, welches das Gemisch über einen Wärmeaustauscher (28) aufheizt.

4. Anlage nach einem der Ansprüche 1 bis 3, ferner gekennzeichnet durch eine Dispersionseinrichtung (16), um die Antriebsflüssigkeit im flüssigen Metall vor dem Erwärmen zu dispergieren.

5. Verfahren zur Erzeugung von elektrischem Strom mittels eines magnetohydrodynamischen Generators (MHD-Generators), mit den Verfahrensschritten der Erwärmung einer MHD-Flüssigkeit zum Erzeugen einer Dampfströmung, die ein flüssiges Metall vorantreibt, der Erzeugung von Elektrizität aus dem strömenden Metall, der Kondensierung des Dampfes und der Rückführung der MHD-Flüssigkeit, um wiederum erwärmt zu werden, dadurch gekennzeichnet, daß die MHD-Flüssigkeit ein Gemisch aus einem flüssigen Metall und einer Antriebsflüssigkeit ist, die entweder Wasser oder eine organische Flüssigkeit ist, mit einem Siedepunkt unter 400°C und einem niedrigeren Siedepunkt als jenem des flüssigen Metalls, wobei die Antriebsflüssigkeit und das flüssige Metall gegenseitig unlöslich sind, daß die Heizeinrichtung die Verdampfung der Antriebsflüssigkeit bewirkt, und daß der Kondensierungsschritt ein flüssiges Metall erzeugt, welches Tröpfchen der Antriebsflüssigkeit trägt.

6. Verfahren nach Anspruch 5, dadurch gekennzeichnet, daß es weiter den Verfahrensschritt umfaßt, die Antriebsflüssigkeit in dem flüssigem Metall vor dem Erwärmungsschritt zu dispergieren.

7. Verfahren nach Anspruch 5 oder 6, dadurch gekennzeichnet, daß der Erwärmungsschritt die Erwärmung der MHD-Flüssigkeit mit einem Solarenergieabsorber (4) umfaßt.

Fig.1.

Fig.2.

Fig.3.

O 018 822